# EUROPEAN PATENT SPECIFICATION

(11) **EP 3 363 682 B1**
(45) Date of publication and mention of the grant of the patent: **14.08.2019**
(21) Application number: 18157527.5
(22) Date of filing: 20.02.2018
(51) Int. Cl.: B60N 2/28

(54) **MOTOR CAR CHAIR FOR A CHILD AND INSERT OF A MOTOR CAR CHAIR FOR A CHILD**
KRAFTFAHRZEUGSITZ FÜR EIN KIND UND EINSATZ EINES KRAFTFAHRZEUGSITZES FÜR EIN KIND
SIÈGE DE VÉHICULE À MOTEUR POUR ENFANT ET INSERT DE SIÈGE DE VÉHICULE À MOTEUR POUR ENFANT

(30) Priority: 21.02.2017 PL 42062017
(43) Date of publication of application: 22.08.2018
(73) Proprietor: KARWALA Spolka z Ograniczona Odpowiedzialnoscia Spolka Komandytowa, 42-130 Szarlejka (PL)
(72) Inventor: Karwala, Lukasz, 42-130 Szarlejka (PL)
(74) Representative: Budzinski, Slawomir

(56) References cited:
- WO-A1-2010/051357
- FR-A1- 2 936 750
- US-B1- 6 193 312

## Description

The object of this invention is a motor car chair for a child and an insert of a motor car chair for a child, intended for transporting a child, in particular a very small child, in motor cars, to be mounted on a cushion of a motor car seat.

US-A-6193312 discloses a seating board for child occupant and a child seat comprising the seating board.

From the specification of Polish application PL-A-337662 a motor car chair for a child is known, intended for transporting a child on a back seat of a motor car. The chair has a cushion and a backrest for the back, mounted to the main support frame made of a pipe. The cushion and the backrest are mounted on a tubular framework made of a tube of a smaller diameter, and the ends of the support frame are provided with yokes to enable interaction of the frame with the framework of the chair, where on a part of the tubular framework interacting with the yokes there are attachments with racetracks to enable changing of the inclination of the backrest. On the horizontal part of the framework a lower racetrack is seated in which there slides in a catching motion a bolt that cooperates with the seat and enables a change of the position of the seat. The chair has catches for crotch, lap and shoulder safety belts integral with the chair that are fastened with a five-point fastener.

From the specification of Polish application PL-A-393904 a motor car chair for a child is known, intended for transporting a child on a backseat of a motor car. The chair has a cushion and a backrest for the back. The chair is characterized in that the angle of positioning of the cushion relative to the support structure is adjusted by means of a catching mechanism.

From the specification of Polish application PL-A-393904 a motor car chair for a child is known, mounted on a cushion of a motor car seat and having a base with a snap catch and a shell seat. The seat has inner belts for a child, having two arm sections extended within the space of the seat and connected there with a tensioning belt extending through a tensioner. Within the space of the seat intended for a child, a crotch coupling element is provided with a fastener for inner belts. The shell seat is provided with a longitudinal bracket extending along the longitudinal axis of the seat, the bracket being provided with a connector, and the base has at least one snap catch coupled with the connector of the bracket when the seat is embedded in the base.

The chairs known from the prior art either have their cushion and backrest movable relative to each other, or a shell in which the cushion and the backrest are not movable relative to each other. In each case such arrangement forms, in a cross-section of the chair, an angular bending between the cushion and the backrest, and this may be disadvantageous, in particular for the smallest children.

In the prior art inserts are known for a motor car chair for a child, in particular for its shell structure. Such an insert is shown in the drawing of Pos. 1 and it causes that the space of the connection of the cushion with the backrest of a motor car chair is filled. For the smallest children this solution is not advantageous, and what is worse, it may contribute to difficulties in physiological functioning of the child. As shown in the drawing of Pos. 1, the head, pelvis and torso of the child are positioned in an arc and this may cause disorder in respiration mechanics and thus ventilation of the child as well as disorders in the digestive system such as contents of the stomach coming back to the esophagus.

The purpose of the invention is to provide a motor car chair for a child and an insert therefor which would be free of the disadvantages of the chairs known from the prior art.

Another purpose of the invention is to provide an insert for a motor car chair for a child that could be applied in existing chairs at a relatively low cost and that is easy and inexpensive in manufacturing and simple in operation.

These and also other objects that will emerge later on, have been achieved by means of a motor car chair for a child and an insert according to the invention.

A motor car chair for a child, according to the invention, mounted on a cushion of a motor car seat, has a shell seat comprising a backrest portion and a cushion portion, mutually converging at an angle and joining each other. The region of junction of the backrest portion and the cushion portion defines a concave curved surface at the inner side of the shell chair seat. The shell seat of the chair is provided with an insert positioned at the site where the backrest portion and the cushion portion of a motor car chair for a child converge and the insert has a thigh surface and a calf surface, converging at a substantially right angle and joined at the opposite side via a convex curved surface.

Preferably, the convex curved surface corresponds to the concave curved surface of the region of convergence of the backrest portion and the cushion portion of the shell seat of the chair.

Also preferably, the thigh surface has in a cross section across the insert a larger area than the calf surface.

Also preferably, the width of the insert is equal to the inner width of the shell seat of the chair.

Also preferably, the width of the insert is smaller than the inner width of the shell seat of the chair.

Further preferably, the shell seat of the chair is provided with an upper insert positioned on the backrest portion of the shell seat of a motor car chair for a child, where the upper insert has an upper part embracing the head of a child and a lower part embracing the torso of the child.

Also preferably, the chair is provided with a base by means of which it is mounted on a motor car seat.

Preferably, the chair has inner belts for a child, having two arm sections, extending within the shell seat of the chair intended for a child and passing to the other side of the chair, connected to a tensioning belt extending through a tensioner, and in the space of the chair intended for a child it has a crotch coupling element provided with a fastener of inner belts, where the crotch coupling element extends through the chair at a site that is not covered by the insert.

Also preferably, the base of the chair is mounted to a motor car seat by means of an isofix system device.

Also preferably, the base of the chair is mounted to a motor car seat by means of safety belts of a motor car.

Also preferably, a crotch coupling element is a belt.

Also preferably, the chair is provided with a handle part.

According to the invention, an insert of a motor car chair for a child mounted on a motor car seat, having a shell seat comprising a backrest potion and a cushion portion extending towards each other and converging, where the region of convergence of the backrest portion and the cushion portion defines a concave curved surface at the inner side of the chair is characterized in that it has a thigh surface and a calf surface converging at a substantially right angle and joined at the opposite side via a convex curved surface.

Preferably, the convex curved surface corresponds to the concave curved surface of the region of convergence of the backrest portion and the cushion portion of the shell seat of the chair.

Also preferably, the thigh surface has in a cross section across the insert a larger dimension than the calf surface.

Also preferably, the width of the insert is equal to the inner width of the shell seat of the chair.

Also preferably, the width of the insert is smaller than the inner width of the shell seat of the chair.

Also preferably, the insert is made of a soft plastic.

Also preferably, the insert is covered with a protective fabric.

The object of the invention is shown in the drawing where fig. 1 shows a motor car chair with an insert in a longitudinal section, fig. 2 shows a motor car chair with an insert and a child in the chair, in a longitudinal section, fig. 3 shows a motor car chair with an insert and a child in the chair, in a front perspective view of the chair, fig. 4 shows an insert for a chair in a perspective view, and fig. 5 shows an insert for a chair with additional equipment, in a perspective view.

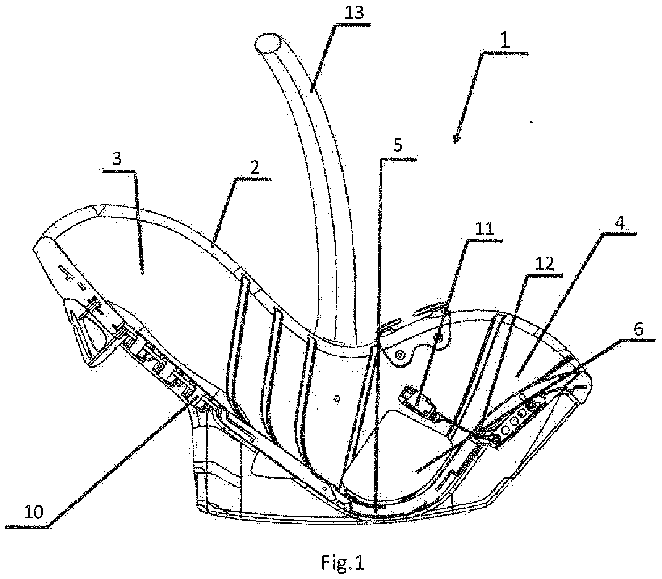

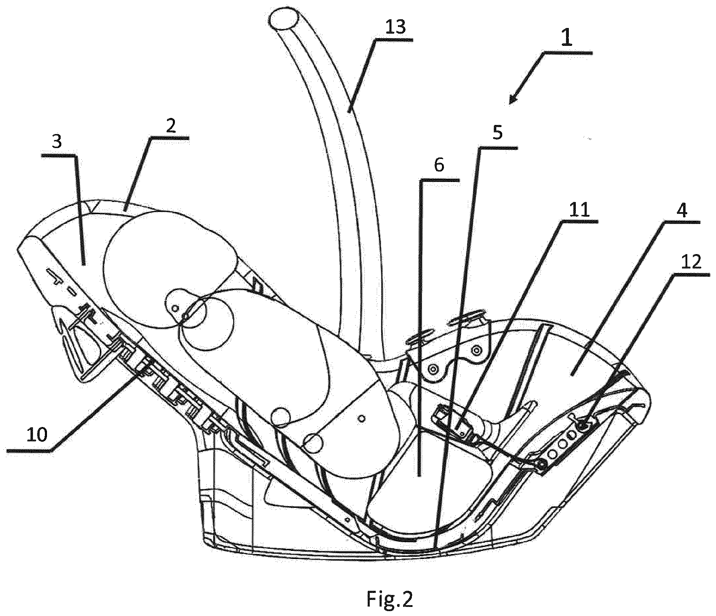

As shown in fig. 1, fig. 2, and fig. 3, a motor car chair 1 for transporting a child, in particular a very small child, is made in a form of a shell seat 2. In the shell seat 2 of the chair 1 there is a backrest portion 3 on which the back of a child transported in the chair 1, and a cushion portion 4 on which thighs and legs of the child are positioned may be distinguished.

In the region where the backrest portion 3 and the cushion portion 4 converge, at the inner side of the shell seat 2 of the chair 1 a concave curved surface 5 is formed which, as mentioned before, may disadvantageously influence the child being transported in the motor car chair 1. To alleviate the disadvantageous effect of such concave curved surface 5 on the child being transported, the shell seat 2 of the chair 1 is provided with an insert 6 positioned at the site, in the shell seat 2 of the chair 1, where the backrest portion 3 and the cushion portion 4 of the shell seat 2 of the motor car chair 1 for a child converge.

An insert 6 for a shell seat 2 of a chair 1 has a special construction that ensures correct position of a child in the chair during transporting by a motor car.

The insert 6 has a thigh surface 7 and a calf surface 8 and both these surfaces converge at a substantially right angle. Upon insertion of the insert 6 in the shell seat 2 of the chair 1 the site of convergence of the thigh surface 7 and the calf surface 8 is the site of the insert 6 furthest from the inner surface of the shell seat 2 of the chair 1.

This causes that the head and torso of the child seated in the chair 1 follow a straight line and the pelvis is in an intermediate position. Therefore the position of the child is more physiologically favorable for the digestive tract and respiratory tract than in other positions of the child in the chairs known from the prior art.

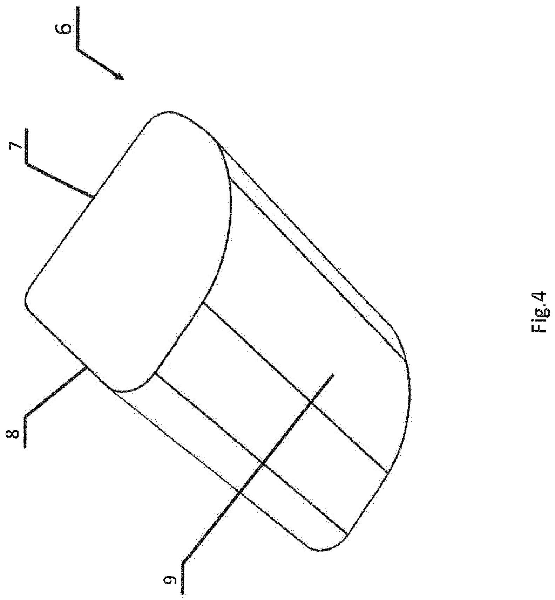

Opposite to the site of convergence sides of the thigh surface 7 and the calf surface 8 of the insert 6 of the chair 1 are joined via a convex curved surface 9. The convex curved surface 9 of the insert 6, in the embodiment of the invention shown in fig. 4, corresponds to the concave curved surface 5 of the region of convergence of the backrest portion and the cushion portion 4 of the shell seat 2 of the chair 1 so as the insert 6 closely adheres the inner part of the shell seat 2 of the chair 1. Of course, in other embodiments of the invention, in particular for versatile inserts 6 intended to be used with earlier use chairs, such shape correspondence may be approximated.

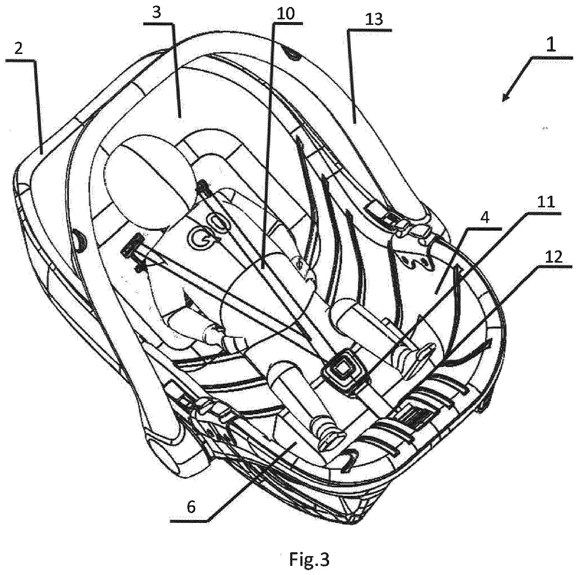

As shown in one embodiment in fig. 3, the insert 6 has a slightly smaller width than the width of the shell seat 2 of the chair 1 at the site where the insert 6 is positioned. This causes that the insert may be easily positioned in the shell seat 2 of the chair 1. Of course, in other embodiments of the invention the insert 6, in particular where it is to be fixedly seated in the shell seat 2, might have a width equal to the width of the shell seat 2 also taking into account its specific side profile.

For better accommodation of the child in the shell seat 2 of the chair 1 with an insert 6, the latter has a thigh surface 7 of a larger dimension in a cross section across the insert 6 than the crosswise dimension of the calf surface 8.

The insert 6 is made of a soft plastic and is covered with a protective fabric and this causes that it is lightweight and at the same time is aesthetically acceptable. The covering fabric may have a form of a removable cover to enable washing necessary to maintain hygienic and aesthetic properties of the insert 6.

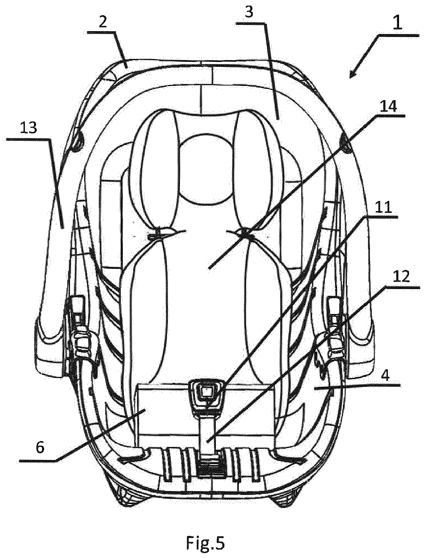

As shown in one embodiment of the invention in fig. 5, the shell seat of the chair is provided with an upper insert 14, positioned on the backrest portion 3 of the shell seat 2 of the motor car chair 1 for a child, where the upper insert 14 has an upper part 14a, embracing the head and torso of the child, and a lower part 14b embracing the torso of the child. The upper part 14a of the upper insert 14 embraces the head of the child, protecting additionally its sides, and the lower part 14b embraces the torso of the child also providing better protection for the sides of the child's torso.

The chair 1 may be provided with a base (not shown) by means of which the chair is mounted on a motor car chair.

If the chair 1 is provided with a base, the latter may be mounted to a motor car seat by means of an isofix system device.

The chair 1 may have a base of the chair 1 mounted to a motor car seat by means of safety belts or the chair 1 may be mounted to a motor car seat directly.

The chair 1 shown in embodiments in fig. 1, fig. 2, and fig. 3 has inner belts 10 for a child, having two arm sections, extending within the space of the shell seat 2 of the chair 1 intended for a child and passing to the other side of the chair 1. The arm sections of the inner belts of the chair 1 are connected to a tensioning belt extending through a tensioner, and within the space of the chair 1 intended for a child a crotch coupling element 12 is provided with a fastener 11 for the inner belts 10. The crotch coupling element 12, which constitutes a section of the belt, passes through the chair 1 at a site that is not covered by the insert 6 so as the insert 6 does not interfere with fastening the inner belts 10 of the chair 1 when a child is seated therein.

For the ease of transporting the motor car chair 1, also along with a child, as shown in fig. 1, fig. 2, and fig. 3, it is provided with a handle part 13 shaped as a bow, which may additionally be rotated relative to its fixing point to the shell seat 2 of the chair 1.

## Claims

1. An insert (6) of a motor car chair (1) for a child mounted on a cushion of a motor car seat having a shell seat (2) comprising a backrest portion (3) and a cushion portion (4) extending at an angle to each other and mutually converging, where the region of convergence of the backrest portion and the cushion portion defines a concave curved (5) of the chair at the inner side of the chair, **characterized in that** the insert (6) has a thigh surface (7) and a calf surface (8), converging at a substantially right angle and joined at the opposite side via a convex curved surface (9).

2. An insert of claim 1, **characterized in that** the convex curved surface (9) of the insert (6) corresponds to the inner curved surface (5) of the region of convergence of the backrest portion (3) and the seat portion (4) of the shell seat (2) of the chair (1).

3. An insert of claim 1, **characterized in that** the thigh surface (7) has in a cross section across the insert (6) a dimension larger than the calf surface (8).

4. An insert of claim 1, **characterized in that** the width of the insert (6) is equal to the inner width of the shell seat (2) of the chair (1).

5. An insert of claim 1, **characterized in that** the width of the insert (6) is smaller than the inner width of the shell seat (2) of the chair (1).

6. An insert of claim 1, **characterized in that** it is made of a soft plastic.

7. An insert of claim 1, **characterized in that** is covered with a protective fabric.

8. A motor car chair (1) for a child, mounted on a cushion of a motor car seat, having a shell seat (2) comprising a backrest portion (3) and a cushion portion (4) extending at an angle towards each other and mutually converging where the region of convergence of the backrest portion (3) and the cushion portion (4) defines a concave curved surface (5) at the inner side of the shell seat (2) of the chair (1) **characterized in that** the shell seat (2) of the chair (1) is provided with an insert (6) positioned at a site where the backrest portion (3) and the cushion portion (4) of the shell seat (2) of the motor car chair (1) for a child converge, the insert (6) having a thigh surface (7) and a calf surface (8), mutually converging at a substantially right angle and joined at the opposite side via a convex curved surface (9).

9. A chair of claim 8, **characterized in that** the convex curved surface (9) of the insert (6) corresponds to the concave curved surface (5) of the region of convergence of the backrest portion (3) and the cushion portion (4) of a shell seat (2) of the chair (1).

10. A chair of claim 8, **characterized in that** the thigh surface (7) has in a cross section across the insert (6) a larger dimension than the dimension of the calf surface (8).

11. A chair of claim 8, **characterized in that** the width of the insert (6) is equal to the inner width of the shell seat (2) of the chair (1).

12. A chair of claim 8, **characterized in that** the width of the insert (6) is smaller than the inner width of the shell seat (2) of the chair (1).

13. A chair of claim 8, **characterized in that** the shell seat (2) of the chair (1) is provided with an upper insert (14) positioned on the backrest portion (3) of the shell seat (2) of the motor car chair (1) for a child, where the upper insert (14) has an upper part (14a) embracing the head of the child and a lower part (14b) embracing the torso of the child.

14. A chair of claim 8, **characterized in that** it is provided with a base by means of which it is mounted on a motor car seat.

15. A chair of claim 13, **characterized in that** the base of the chair (1) is mounted to a motor car seat by means of an isofix system device.

16. A chair of claim 13, **characterized in that** the base of the chair (1) is mounted to a car seat by means of safety belts of the motor car.

17. A chair of claim 8, **characterized in that** it has inner belts (10) for a child, having two arm sections, extending within the space of the shell seat (2) of the chair (1) intended for the child, and passing to the other side of the chair (1), connected to a tensioning belt extending through a tensioner, and within the space of the chair (1) intended for a child it has a crotch coupling element (12), provided with a fastener (11) of the inner belts (10), where the crotch coupling element (12) extends through the chair (1) at a side that is not covered by the insert (6).

18. A chair of claim 8, **characterized in that** the crotch coupling element (12) is a belt.

19. A chair of claim 8, **characterized in that** it is provided with a handle part (13).

## Patentansprüche

1. Einsatz (6) eines auf einem Polster eines Autositzes montierten Kraftfahrzeugsitzes (1) für ein Kind mit einem Schalensitz (2), der einen Rückenlehnenabschnitt (3) und einen Polsterabschnitt (4) umfasst, die sich in einem Winkel zueinander erstrecken und zusammenlaufen, wobei der Zusammenlaufbereich des Rückenlehnenabschnitts und des Polsterabschnitts eine konkav gekrümmte (5) des Sitzes an der Innenseite des Sitzes definiert, **dadurch gekennzeichnet, dass** der Einsatz (6) eine Oberschenkelfläche (7) und eine Wadenfläche (8) aufweist, die im Wesentlichen rechtwinklig zusammenlaufen und an der gegenüberliegenden Seite über eine konvex gekrümmte Oberfläche (9) verbunden sind.

2. Einsatz nach Anspruch 1, **dadurch gekennzeichnet, dass** die konvex gekrümmte Oberfläche (9) des Einsatzes (6) der inneren gekrümmten Oberfläche (5) des Zusammenlaufbereichs des Rückenlehnenabschnitts (3) und des Sitzabschnitts (4) des Schalensitzes (2) des Sitzes (1) entspricht.

3. Einsatz nach Anspruch 1, **dadurch gekennzeichnet, dass** die Oberschenkelfläche (7) in einem Querschnitt über dem Einsatz (6) eine als die Wadenfläche (8) größere Abmessung aufweist.

4. Einsatz nach Anspruch 1, **dadurch gekennzeichnet, dass** die Breite des Einsatzes (6) gleich der Innenbreite des Schalensitzes (2) des Sitzes (1) ist.

5. Einsatz nach Anspruch 1, **dadurch gekennzeichnet, dass** die Breite des Einsatzes (6) kleiner als die Innenbreite des Schalensitzes (2) des Sitzes (1) ist.

6. Einsatz nach Anspruch 1, **dadurch gekennzeichnet, dass** es aus einem weichen Kunststoff gefertigt ist.

7. Einsatz nach Anspruch 1, **dadurch gekennzeichnet, dass** es mit einem Schutzstoff bedeckt ist.

8. Kraftfahrzeugsitz (1) für ein Kind, der auf einem Polster eines Autositzes montiert ist, mit einem Schalensitz (2), der einen Rückenlehnenabschnitt (3) und einen Polsterabschnitt (4) umfasst, die sich in einem Winkel zueinander erstrecken und zusammenlaufen, wobei der Zusammenlaufbereich des Rückenlehnenabschnitts (3) und des Polsterabschnitts (4) eine konkav gekrümmte Oberfläche (5) an der Innenseite des Schalensitzes (2) des Sitzes (1) definiert, **dadurch gekennzeichnet, dass** der Schalensitz (2) des Sitzes (1) mit einem Einsatz (6) versehen ist, der an einer Stelle positioniert ist, an der der Rückenlehnenabschnitt (3) und der Polsterabschnitt (4) des Schalensitzes (2) des Kraftfahrzeugsitzes (1) für ein Kind zusammenlaufen, wobei der Einsatz (6) eine Oberschenkelfläche (7) und eine Wadenfläche (8) aufweist, die im Wesentlichen rechtwinklig zusammenlaufen und an der gegenüberliegenden Seite über eine konvex gekrümmte Oberfläche (9) verbunden sind.

9. Sitz nach Anspruch 8, **dadurch gekennzeichnet, dass** die konvex gekrümmte Oberfläche (9) des Einsatzes (6) der konkav gekrümmten Oberfläche (5) des Zusammenlaufbereichs des Rückenlehnenabschnitts (3) und des Polsterabschnitts (4) eines Schalensitzes (2) des Sitzes (1) entspricht.

10. Sitz nach Anspruch 8, **dadurch gekennzeichnet, dass** die Oberschenkelfläche (7) in einem Querschnitt über dem Einsatz (6) eine größere Abmessung als die Abmessung der Wadenfläche (8) aufweist.

11. Sitz nach Anspruch 8, **dadurch gekennzeichnet, dass** die Breite des Einsatzes (6) gleich der Innenbreite des Schalensitzes (2) des Sitzes (1) ist.

12. Sitz nach Anspruch 8, **dadurch gekennzeichnet, dass** die Breite des Einsatzes (6) kleiner als die Innenbreite des Schalensitzes (2) des Sitzes (1) ist.

13. Sitz nach Anspruch 8, **dadurch gekennzeichnet, dass** der Schalensitz (2) des Sitzes (1) mit einem oberen Einsatz (14) versehen ist, der auf dem Rückenlehnenabschnitt (3) des Schalensitzes (2) des Kraftfahrzeugsitzes (1) für ein Kind positioniert ist, wobei der obere Einsatz (14) einen den Kopf des Kindes umfassten oberen Teil (14a) und einen den Rumpf des Kindes umfassenden unteren Teil (14b) aufweist.

14. Sitz nach Anspruch 8, **dadurch gekennzeichnet, dass** es mit einer Basis versehen ist, mit der es auf einem Autositz montiert ist.

15. Sitz nach Anspruch 13, **dadurch gekennzeichnet, dass** die Basis des Sitzes (1) mittels einer Isofix-Systemvorrichtung an einem Autositz montiert ist.

16. Sitz nach Anspruch 13, **dadurch gekennzeichnet, dass** die Basis des Sitzes (1) mittels Sicherheitsgurte des Kraftfahrzeugs an einem Autositz montiert ist.

17. Sitz nach Anspruch 8, **dadurch gekennzeichnet, dass** es innere Gurte (10) für ein Kind aufweist, die zwei Armabschnitte aufweisen, die sich im Raum des Schalensitzes (2) des für das Kind vorgesehenen Sitzes (1) erstrecken und zur anderen Seite des Sitzes (1) führen, die mit einem Spanngurt verbunden sind, der sich durch einen Spanner erstreckt, und innerhalb des Raums des für ein Kind vorgesehenen Sitzes (1) es ein Schrittkupplungselement (12) aufweist, das mit einem Schnallelement (11) der inneren Gurte (10) versehen ist, wobei sich das Schrittkupplungselement (12) durch den Sitz (1) auf einer durch den Einsatz (6) nicht abgedeckten Seite erstreckt.

18. Sitz nach Anspruch 8, **dadurch gekennzeichnet, dass** das Schrittkupplungselement (12) ein Gurt ist.

19. Sitz nach Anspruch 8, **dadurch gekennzeichnet, dass** es mit einem Griffteil (13) versehen ist.

## Revendications

1. Insert (6) de siège (1) de véhicule à moteur pour enfant monté sur le coussin d'un siège de véhicule à moteur comportant une assise coque (2) comprenant une partie dossier (3) et une partie coussin (4) s'étendant selon un angle l'un par rapport à l'autre et convergeant mutuellement là où la région de convergence de la partie dossier et de la partie coussin définit une surface incurvée concave (5) du siège du côté intérieur du siège, **caractérisé en ce que** l'insert (6) a une surface de cuisse (7) et une surface de mollet (8), convergeant à un angle sensiblement droit et reliés du côté opposé par une surface incurvée convexe (9).

2. Siège selon la revendication 1, **caractérisé en ce que** la surface incurvée convexe (9) de l'insert (6) correspond à la surface incurvée interne (5) de la région de convergence de la partie dossier (3) et de la partie siège (4) de l'assise coque (2) du siège (1).

3. Siège selon la revendication 1, **caractérisé en ce que** la surface de cuisse (7) a dans une section transversale à travers l'insert (6) une dimension supérieure à celle de la surface de mollet (8).

4. Siège selon la revendication 1, **caractérisé en ce que** la largeur de l'insert (6) est égale à la largeur intérieure de l'assise coque (2) du siège (1).

5. Siège selon la revendication 1, **caractérisé en ce que** la largeur de l'insert (6) est inférieure à la largeur intérieure de l'assise coque (2) du siège (1).

6. Siège selon la revendication 1, **caractérisé en ce qu'**il est réalisé d'un plastique mou.

7. Siège selon la revendication 1, **caractérisé en ce qu'** ile est recouvert d'un tissu protecteur.

8. Siège (1) de véhicule à moteur pour enfant, monté sur le coussin d'un siège de véhicule à moteur, ayant une assise coque (2) comprenant une partie dossier (3) et une partie coussin (4) s'étendant selon un angle l'un par rapport à l'autre et convergeant mutuellement là où la région de convergence de la partie dossier (3) et de la partie coussin (4) définit une surface incurvée concave (5) du côté intérieur de l'assise coque (2) du siège (1) **caractérisé en ce que** l'assise coque (2) du siège (1) est pourvu d'un insert (6) positionné à un endroit où la partie dossier (3) et la partie coussin (4) de l'assise coque (2) du siège (1) de véhicule à moteur pour un enfant convergent, l'insert (6) ayant une surface de cuisse (7) et une surface de mollet (8), convergeant mutuellement à un angle sensiblement droit et reliés du côté opposé par une surface incurvée convexe (9).

9. Siège selon la revendication 8, **caractérisé en ce que** la surface incurvée convexe (9) de l'insert (6) correspond à la surface incurvée concave (5) de la région de convergence de la partie dossier (3) et de la partie coussin (4) d'une assise coque (2) du siège (1).

10. Siège selon la revendication 8, **caractérisé en ce que** la surface de cuisse (7) a dans une section transversale à travers l'insert (6) une dimension supérieure à celle de la surface de mollet (8).

11. Siège selon la revendication 8, **caractérisé en ce que** la largeur de l'insert (6) est égale à la largeur intérieure de l'assise coque (2) du siège (1).

12. Siège selon la revendication 8, **caractérisé en ce que** la largeur de l'insert (6) est inférieure à la largeur intérieure de l'assise coque (2) du siège (1).

13. Siège selon la revendication 8, **caractérisé en ce que** l'assise coque (2) du siège (1) est pourvu d'un insert supérieur (14) positionné sur la partie dossier (3) de l'assise coque (2) du siège (1) de véhicule à moteur pour enfant, où l'insert supérieur (14) a une partie supérieure (14a) embrassant la tête de l'enfant et une partie inférieure (14b) embrassant le torse de l'enfant.

14. Siège selon la revendication 8, **caractérisé en ce qu'**il est muni d'une base au moyen de laquelle il est monté sur un siège de véhicule à moteur.

15. Siège selon la revendication 13, **caractérisé en ce que** la base du siège (1) est montée sur un siège de véhicule à moteur au moyen d'un dispositif système isofix.

16. Siège selon la revendication 13, **caractérisé en ce que** la base du siège (1) est montée sur un siège de véhicule à moteur au moyen des ceintures de sécurité de véhicule à moteur.

17. Siège selon la revendication 8, **caractérisé en ce qu'**il comporte des ceintures intérieures (10) pour enfant, comportant deux sections de bras, s'étendant dans l'espace de l'assise coque (2) du siège (1) destiné à l'enfant et passant à l'autre côté du siège (1), relié à une ceinture de tension s'étendant à travers un tensionneur, et dans l'espace du siège (1) destiné à un enfant, il comporte un élément d'accouplement de fourche (12), muni d'une attache (11) des ceintures intérieures (10), où l'élément d'accouplement de fourche (12) traverse le siège (1) d'un côté non recouvert par l'insert (6).

18. Siège selon de la revendication 8, **caractérisé en ce que** l'élément d'accouplement de fourche (12) est une ceinture.

19. Siège selon la la revendication 8, **caractérisé en ce qu'**il est muni d'une pièce de poignée (13).
